# EUROPEAN PATENT SPECIFICATION

(11) **EP 3 124 836 B1**
(45) Date of publication and mention of the grant of the patent: **18.09.2019**
(21) Application number: 16181742.4
(22) Date of filing: 28.07.2016
(51) Int. Cl.: F16K 1/22, F02C 7/232, F16K 27/02, F04D 27/02, F02C 6/08, F16K 31/16, F16K 31/04

(54) **PASSIVE SERVO FILTER FOR PNEUMATIC VALVE WITH TRANSVERSE ACTUATOR**
PASSIVER SERVOFILTER FÜR PNEUMATIKVENTIL MIT QUERAKTUATOR
FILTRE D'ASSERVISSEMENT PASSIF POUR SOUPAPE PNEUMATIQUE AVEC ACTIONNEUR TRANSVERSAL

(30) Priority: 30.07.2015 US 201514814245
(43) Date of publication of application: 01.02.2017
(73) Proprietor: Hamilton Sundstrand Corporation, Charlotte, NC 28217 (US)
(72) Inventor: McAuliffe, Christopher, Windsor, CT Connecticut 06095 (US); Kamp, Joshua, Glastonbury, CT Connecticut 06033 (US); Dabrowski, Jaroslaw, 15-773 Bialystok (PL)
(74) Representative: Dehns

(56) References cited:
- EP-A2- 2 482 161
- WO-A1-03/027552
- AT-B- 400 176
- FR-A1- 2 477 254
- US-A- 4 367 861

## Description

### BACKGROUND

The disclosure relates generally to pneumatic valves, and more particularly to pneumatic valves having a passive servo filter.

Pneumatically actuated valves, typically but not exclusively butterfly valves, use servo air acting on either side of a piston to provide a linear force which is converted into a rotary motion to position the butterfly disc. Often the servo air is drawn from a valve inlet side, then is routed through a servo valve. The servo valve modulates servo airflow to position the valve as desired.

Due to their relatively small size in comparison to the main pneumatic valve, many servo valves often have tight operating clearances. Operation can therefore be impaired by airborne contaminants (e.g., dust, sand particles, foreign objects, etc.) which may be found in the primary flow of the valve. Some of these contaminants are too large to pass through the servo valve clearances, leading to accumulation of particulate in key areas. This will degrade performance of the servo valve and result in eventual failure of the pneumatic valve. EP 2482161 A2 describes a pitot tube with increased particle separation efficiency.

### SUMMARY

The invention comprises a bleed assembly as defined in claim 1.

A valve assembly may also include at least one wall defining a main fluid passage having an upstream side and a downstream side, a top dead center (TDC) position, and a bottom dead
center (BDC) position. A flow control member may be mounted to a shaft entering the main fluid passage at the TDC position. The member may be rotatable in the main fluid passage between a fully closed position defined by leading and trailing edges abutting one or more passage walls, and a fully open position defined by the leading edge at the upstream side of the passage and the trailing edge at the downstream side of the passage. A servo tube includes a first tube portion extending into the main fluid passage from a port disposed distance P₁ upstream of the leading edge of the member when the member is in the fully open position, and disposed at angular distance A₁ from the TDC position. Angular distance A₁ is at least 10° measured in a direction around the main fluid passage toward the trailing edge when the member is in the fully closed position, and distance P₁ is equal to or greater than at least 60% of passage diameter Dᵢ.

### BRIEF DESCRIPTION OF THE DRAWINGS

FIG. 1 is a simplified schematic of a bleed system.
FIG. 2 is a cutaway, top-facing view of the valve actuator assembly.
FIG. 3A is a perspective view of a fully closed butterfly valve suitable for use in the bleed system shown in FIG. 1.
FIG. 3B is a perspective view of the butterfly valve shown in FIG. 3A, in a fully open position.
FIG. 3C schematically shows a position of a servo tube in the main fluid passage.
FIG. 4A is a partial sectional view showing a location of the servo inlet with the valve in a fully closed position.
FIG. 4B is a partial sectional view showing a location of the servo inlet with the valve in a fully open position.

### DETAILED DESCRIPTION

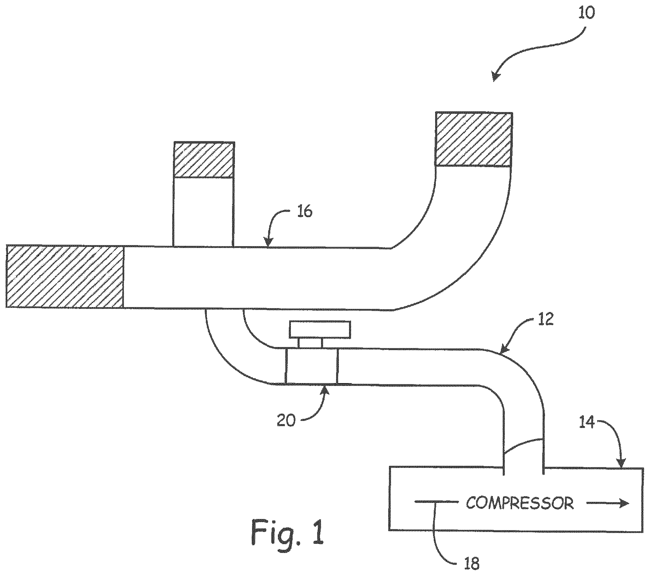

FIG. 1 shows a schematic of a bleed assembly 10. Bleed assembly 10 can be part of a gas turbine engine (not shown) or other arrangement whereby a portion of a compressed fluid such as air is tapped from a working fluid path and used for other purposes. For example, in the context of a gas turbine engine, air can be bled from the compressor for thermal management, environmental control systems, engine starting, or other myriad uses.

Example bleed assembly includes bleed duct 12 providing communication between compressor 14 and manifold 16. Valve 20 can be disposed across bleed duct 12 to control flow the amount of compressed fluid drawn from working fluid stream 18.

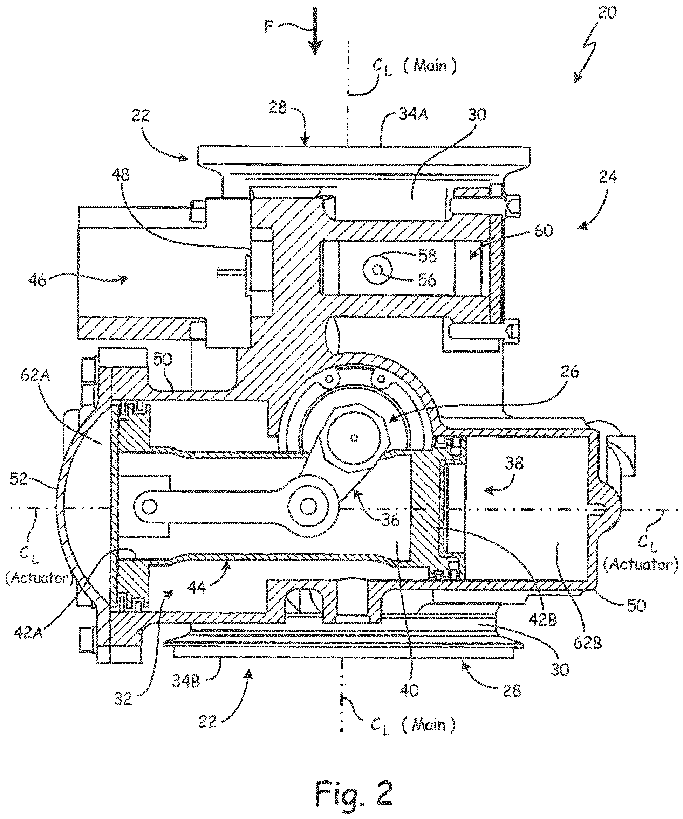

FIG. 2 shows an example valve 20 which can be used in the assembly shown in FIG. 1, among other uses. Valve 20 generally includes valve housing 22, actuator assembly 24, and shaft 26. Valve housing 22 can have at least one wall defining main fluid passage 28. Here, the at least one wall includes cylindrical wall 30. Actuator assembly 24 can be disposed in actuator chamber 32, which is also defined by one or more walls retaining actuator components.

Valve 20 can be actuated in response to a pressure input as compared to a desired pressure setpoint. The pressure input can be from a sensor (not shown) disposed in bleed duct 12 (shown in FIG. 1) or other suitable flow location in or away from valve 20. In this and other installations, valve 20 is intended to control fluid flow in a single direction. In the example bleed assembly installation shown in FIG. 1, the compressed working fluid is expected to enter main fluid passage 28 on upstream side 34A, represented by arrow F. And when permitted by opening of valve 20, working fluid exits main fluid passage 28 through downstream side 34B.

Note that "upstream" and "downstream" are described with reference to the intended flow direction through main fluid passage 30. In this type of installation, designed to regulate flow in a single direction, the description of "upstream" and "downstream" are not intended to encompass transient, emergency, or other unplanned events whereby reversals of flow occur, temporarily resulting in the "upstream" side having "downstream" flow, or vice versa. It will be recognized that other installations of valve 20 may be configured to regulate flow in both directions. However, the totality of this disclosure will make any useful or needed modifications for bidirectional flow installations readily apparent to one skilled in the art.

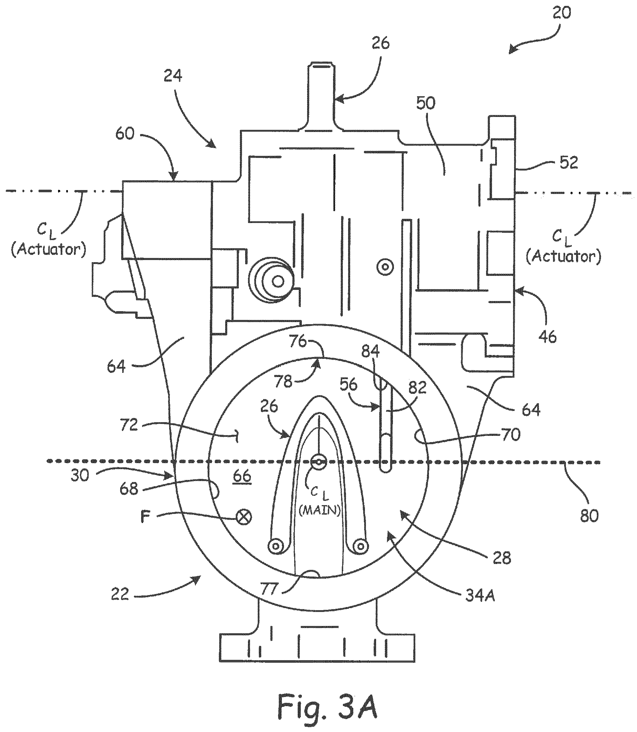

Returning to FIG. 2, actuator assembly 24 is operably connected to shaft 26 which drives movement of a flow control member (shown in FIGS. 3A-4B) disposed in main fluid passage 28 between upstream side 34A and downstream side 34B. In this particular example, actuator assembly 24 includes linear actuator 38 operably connected to shaft 26 via crank assembly 36. One type of crank assembly 36 is shown, but the disclosure is not so limited.

Linear actuator 38 can be disposed perpendicular to centerline C_{L} (Main) of main fluid passage 28, so that linear motion of actuator 38, *e.g*., along centerline C_{L} (Actuator), is transverse thereto. Linear actuator 38 can include piston rod 40 connecting a pair of horizontally opposed pistons 42A, 42B defining piston unit 44. Actuator assembly 24 can also include torque motor 46 disposed in motor chamber or mount 48. In addition, actuator chamber 32 can include walls 50 and cover 52 for retaining piston unit 44 while also providing access for maintenance.

Torque motor 46 can actuate linear actuator 38 by driving piston unit 44 along centerline C_{L} (Actuator). In the example shown, fluid from upstream side 34A of main fluid passage 28 is drawn into actuator chamber 32 via servo tube 56, and enters through supply port 58 disposed in filter chamber 60 and formed through one of the walls defining actuator chamber 32. A filter element (omitted for clarity) can be provided in filter chamber 60 to clean the fluid of particulates and/or contaminants before it is supplied to actuator 38.

Fluid is drawn from main fluid passage 28 via servo tube 56 (better seen in FIGS. 3A-4B), and eventually enters servo portion 62A and supply portion 62B. Fluid is provided directly to supply portion 62B from main fluid passage 28 (via supply port 58) so that pressure in supply portion 62B is substantially equal to that on passage upstream side 34A of main fluid passage 28. Torque motor 46 temporarily changes pressure against piston 42A relative to piston 42B, and the resulting pressure balance across piston unit 44, by actuating a servo valve (not shown). Fluid is added or removed from servo portion 62A, changing the pressure in servo portion 62A until the flow control member (shown in FIGS. 3A-4B) is at the desired position for providing the intended pressure drop or flow rate across main fluid passage 28.

Depending on operating conditions of a particular installation, fluid drawn from main fluid passage 28 via supply port 58, can be subject to particulate infiltration. A filter (disposed in filter chamber 60) can remove some of the particulates. However arranging the inlet of servo tube 56, as shown in subsequent figures, can optimize flow through the valve over its operating envelope, while also minimizing particulate infliltration into chamber 60 and beyond.

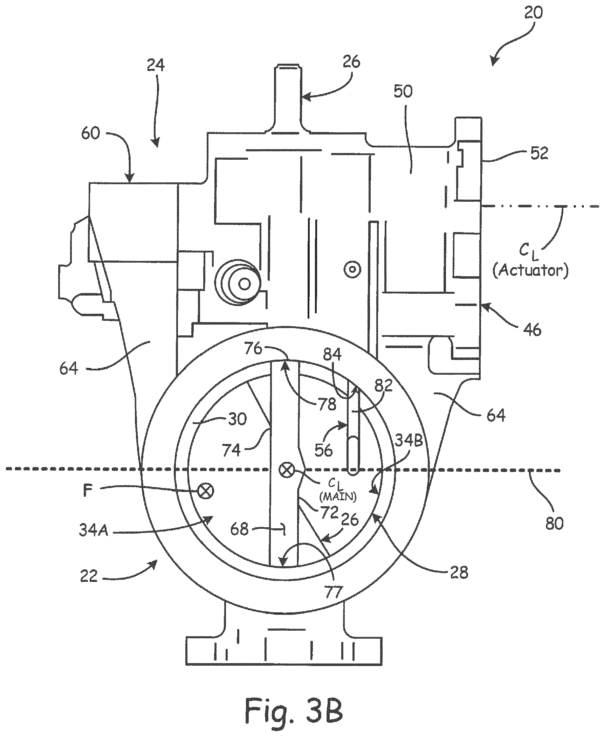

FIG. 3A shows a side view of valve 20 in a fully closed configuration, while FIG. 3B shows valve 20 in a fully open configuration. FIGS. 3A and 3B are viewed in the intended flow direction such that upstream side 34A of main fluid passage 30 is visible in both figures, while downstream side 34B is only visible in FIG. 3B.

In addition to elements in preceding figures, FIGS. 3A and 3B show support brackets 64, as well as flow control member 66, which can include leading edge 68, trailing edge 70, upstream face 72, and downstream face 74. Also shown in both figures are top dead center (TDC) position 76 and bottom dead center (BDC) position 77 of main fluid passage 28, as well as central diametral plane 80. FIGS. 3A and 3B also show first portion 82 of servo tube 56 in main fluid passage 28, as well as port 84 through which servo tube 56 extends.

As better seen in these views, actuator assembly 24 and actuator chamber 34 have a combined center of gravity directly above the flow control element 66 and substantially proximate to shaft 26. Elements of actuator chamber 24 are spaced above main fluid passage 28 such that valve 20 is more balanced than a conventional cantilevered valve. Support brackets 64, which can be integral to housing 22, provide further lateral support in certain embodiments. However, the arrangement is not so limited. Additional details of transversely mounted actuator valves can also be found in copending United States Patent Application Serial No. 14/599,898 filed on January 19, 2015, which is herein incorporated by reference in its entirety.

Flow control member 66 can be a disc or other structure that, at least when fully closed, generally separates upstream side 34A from downstream side 34B of main fluid passage 28. In the example shown, where member 66 is a disc, member 66 can be rotatable in main fluid passage 28 between a fully closed position and a fully open position. The fully closed position, shown in FIG. 3A, can be defined by leading edge 68 and trailing edge 70 abutting the one or more walls (e.g., cylindrical wall 30) defining main fluid passage 28. The fully open position, shown in FIG. 3B, can be defined by member 66 having leading edge 68 at upstream side 34A and trailing edge 70 at downstream side 34B of passage 28.

As with other directional descriptors, leading edge 68, trailing edge 70, upstream face 72, and downstream face 74 are defined generally based on an intended flow direction through main fluid passage 30. As such, with FIGS. 3A and 3B viewed from upstream side 34A relative to flow direction F, downstream face 74 is not visible in FIG. 3A, and trailing edge 70 is not visible in FIG. 3B. Note that top and bottom are defined relative to the common orientation shown in FIGS. 3A-4B, but it is recognized that certain installations and operating parameters could result in temporary orientation variation.

As noted with respect to FIG. 2, shaft 26 is driven by actuator assembly 24 to position the flow control member. FIGS. 3A and 3B show disc member 66 mounted to shaft 26 for operable connection with actuator assembly 24. Shaft 26 enters main fluid passage 28 via bore 78. Bore 78 is disposed at TDC position 76 through the at least one wall (e.g., cylindrical wall 30) proximate to member / disc 66 (between upstream side 34A and downstream side 34B).

In addition to the optional active filter described above, servo tube 56 operates as a passive particle separator to draw clean air from main flow passage 28. Servo tube 56 can include first portion 82 extending into main fluid passage 28 from port 84 formed through the at least one wall (e.g., cylindrical wall 30). First portion 82 can extend down to a point proximate to or even with central diametral plane 80, which passes through main fluid passage 28, including valve centerline C_{L} (Main) in a direction normal to shaft 26.

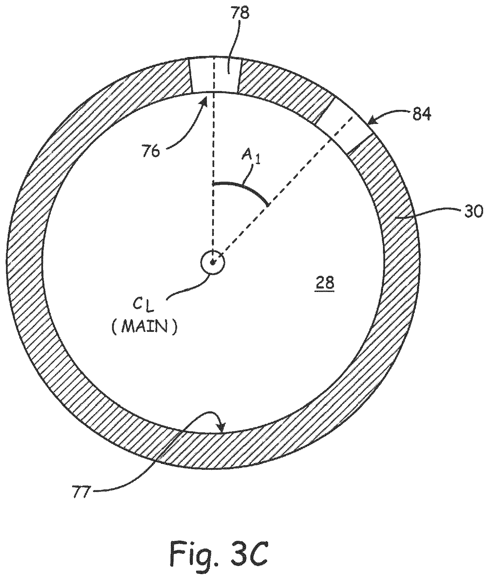

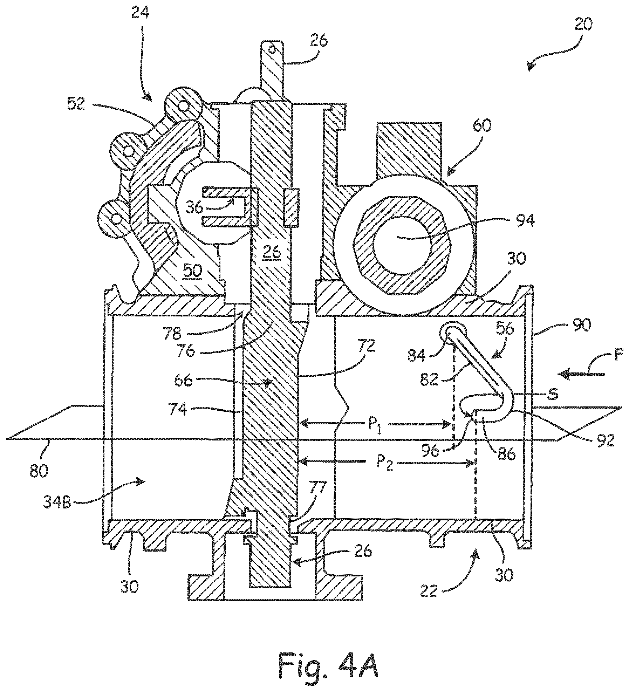

FIG. 3C schematically depicts the angular location of port 84 in main fluid passage 28. Port 84 can be formed through wall 30 such that it is disposed at an angular distance A₁. Angular distance A₁ is measured from the TDC position in a direction around main fluid passage 28 toward trailing edge of disc member 66 when member 66 is in the fully closed position shown in FIG. 3A. In certain embodiments, angular distance A₁ is at least about 10°. In certain of these embodiments, angular distance A₁ does not exceed about 35°. Port 84 can also be disposed a distance P₁ upstream of disc member 66 when member 66 is in a fully closed position (best seen in FIG. 4A).

Previous iterations, intended for butterfly valves with cantilevered actuators, have a servo tube aligned with the disc and shaft such that the port is positioned at TDC and the opening is in turn positioned close to the duct wall. The servo tube typically has a single length in the main passage and a scarf cut at the end of the tube angled to the downstream to pick up air. Typically the tube is located with the opening positioned close to the duct wall to reduce the valve overall envelope. However, when the valve is open, this close proximity can result in turbulence from the leading edge of the disc distorting the airflow into the tube and reducing its precision and responsiveness to commands.

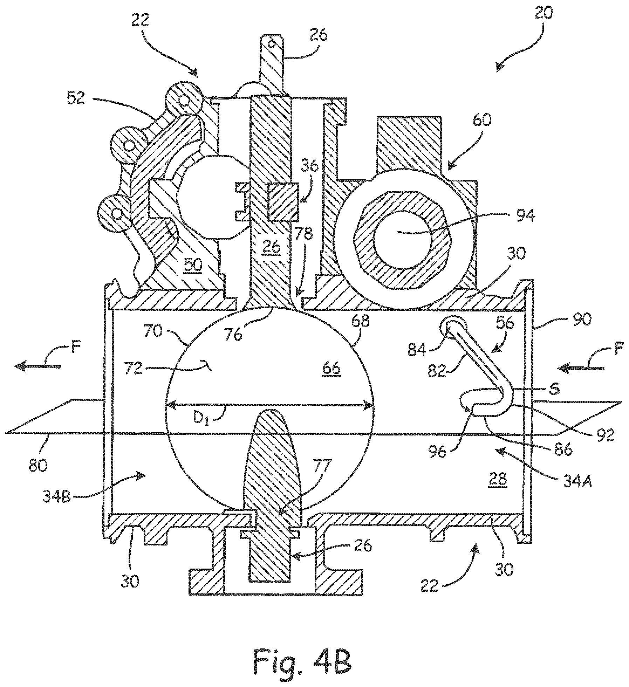

FIGS. 4A and 4B are partial cutaway views of valve 20 and passage 28. Like the preceding pair of figures, FIG. 4A shows valve 20 in a closed configuration while FIG. 4B shows it in an open configuration. Crank assembly 36 is pushed or pulled relative to shaft 26 which converts linear motion to angular motion of member / disc 66.

FIGS. 4A and 4B show first portion 82 of servo tube 56 extending toward main passage inlet 90 at an upstream angle from port 84, while second portion 86 is aimed generally downstream. In this example, elbow 88 connects second portion 86 of servo tube 56 to first portion 82. Second portion 86 has a generally downstream opening 96 facing flow control member / disc 66. Second portion 86 can also be substantially parallel to, and radially offset from valve centerline C_{L} (Main). In certain embodiments, second portion 86 extends through a central diametrical plane 80 of main fluid passage 28.

Elbow 92 is disposed proximate to main passage inlet 90 to main fluid passage 28, and can have a bend angle of more than 90°. The bend angle can coincide with the angle of first portion 82 and simplify insertion of tube 56 into passage 28, while providing ready access to filter 94 disposed in filter chamber 60.

Port 84 can be disposed a distance P₁ upstream of disc member 66 when member 66 is in a fully closed position. (closed position shown in FIGS. 3A and 4A). Distance P₁ is equal to or greater than at least 60% of a passage / disc diameter D₁ to provide clearance for rotation of disc 50 while ensuring access to actuator assembly 24. In certain of these embodiments, distance P₁ is also no more than at most 80% of passage / disc diameter D₁. In yet certain of these embodiments, distance P₁ is between about 65% and about 75% of passage / disc diameter D₁.

Servo tube opening 96 can be disposed a distance P₂ upstream of disc member 66 when member 66 is in a fully closed position (closed position shown in FIGS. 3A and 4A). Distance P₂ is equal to or greater than about 50% of diameter D₁. This arrangement has been shown through simulations to greatly reduce intake of particulates into the actuator chamber throughout the operating range of the disc. Improved performance even takes into account use in a gas turbine bleed system where the valve spends 90% of more of its time in a closed position.

Servo tube 56 can extend either straight down or be angled upstream from port 84. Tube inlet of the servo tube can be located in or proximate to a horizontal plane through the valve centerline. A direct route from the inlet chamber to the filter, which can be offset from the main valve centerline to provide balance in valves with a transversely mounted actuator, further reduces the possible locations for particle accumulation in the servo tube before airflow (and the entrained particles) reaches the filter and the remainder of the actuator assembly.

As noted previously, valve 20 is suitable for use in the bleed arrangement shown in FIG. 1. However, it will be appreciated that valve 20 can be used in other bleed arrangements, or a different application entirely. The position of the servo tube and its offset entry from the main fluid passage into the actuator chamber allows efficient use of the transversely mounted actuator with minimal flow disruption while effectively drawing servo air S into the actuator system for rapid and accurate servo response.

### Discussion of Possible Embodiments

The following are non-exclusive descriptions of possible embodiments of the present disclosure.

A bleed assembly includes a bleed valve disposed across a bleed duct. The bleed valve includes a valve housing, a shaft connecting an actuator assembly to a flow control member, and a servo tube. The actuator assembly includes a linear actuator disposed perpendicular to a valve centerline, so that linear motion of the actuator is transverse to a valve centerline. The member is in the main fluid passage, rotatable between a fully closed position defined by leading and trailing edges abutting one or more housing walls, and a fully open position defined by the leading edge at the upstream side and the trailing edge at the downstream side of the main flow passage. A first portion of a servo tube extends into the main passage from a distance P₁ upstream of the member in a fully closed position, and angular distance A₁ of at least 10° from the top dead center (TDC) position.

The bleed assembly embodiment of the preceding paragraph can optionally include, additionally and/or alternatively, any one or more of the following features, configurations and/or additional components:

A bleed assembly according to an exemplary embodiment of this disclosure, among other possible things includes a bleed duct providing communication between a compressor and a manifold; and a bleed valve disposed across the bleed duct, the bleed valve comprising:a valve housing including at least one wall defining a main fluid passage having an upstream side and a downstream side, a top dead center (TDC) position, and a bottom dead center (BDC) position; an actuator assembly disposed in an actuator chamber, the actuator assembly including a linear actuator disposed perpendicular to the main fluid passage centerline, so that linear motion of the actuator is transverse to a valve centerline; a flow control member separating the upstream side from the downstream side of the main fluid passage, the member including a leading edge, a trailing edge, an upstream face and a downstream face, the member rotatable in the main fluid passage between a fully closed position defined by the leading and trailing edges abutting the one or more walls, and a fully open position defined by the member having the leading edge at the upstream side and the trailing edge at the downstream side of the main flow passage; a shaft connecting the flow control member to the actuator assembly; and a servo tube including a first portion extending from a port formed through the at least one wall, the port disposed a distance P₁ upstream of the member when the member is in a fully closed position, and an angular distance A₁ of from the TDC position; wherein the angular distance A₁ is at least 10° as measured in a direction around the main fluid passage toward the trailing edge of the member when the member is fully closed, and the distance P₁ is equal to or greater than at least 60% of a passage diameter D₁.

A further embodiment of the foregoing assembly, wherein the actuator assembly includes a filter chamber configured to receive working fluid entering the actuator assembly from the servo tube.

A further embodiment of any of the foregoing assemblies, wherein the actuator assembly also includes a torque motor in communication with the linear actuator.

A further embodiment of any of the foregoing assemblies, wherein the first portion of the servo tube extends straight into the main fluid passage in a direction generally parallel to the shaft.

A further embodiment of any of the foregoing assemblies, wherein the first portion of the servo tube extends from the port at an upstream angle toward an inlet to the main fluid passage.

A further embodiment of any of the foregoing assemblies, wherein the servo tube also includes an elbow proximate to an inlet to the main fluid passage, the elbow having a bend angle of more than 90°.

A further embodiment of any of the foregoing assemblies, wherein the servo tube also includes a second portion substantially parallel to, and radially offset from a valve centerline.

A further embodiment of any of the foregoing assemblies, wherein the second portion extends through a central diametrical plane of the main fluid passage.

A further embodiment of any of the foregoing assemblies, wherein the second portion has a generally downstream opening facing the flow control member.

A further embodiment of any of the foregoing assemblies, wherein the opening is disposed a distance P₂ upstream of the member when the member is in a fully closed position, the distance P₂ equal to or greater than at least 50% of the passage diameter D₂.

A further embodiment of any of the foregoing assemblies, wherein the actuator assembly and the actuator chamber have a combined center of gravity directly above the flow control element and substantially proximate to the shaft.

A valve assembly includes at least one wall defining a main fluid passage having an upstream side and a downstream side, a top dead center (TDC) position, and a bottom dead center (BDC) position. A flow control member is mounted to a shaft entering the main fluid passage at the TDC position. The member is rotatable in the main fluid passage between a fully closed position defined by leading and trailing edges abutting one or more passage walls, and a fully open position defined by the leading edge at the upstream side of the passage and the trailing edge at the downstream side of the passage. A servo tube includes a first tube portion extending into the main fluid passage from a port disposed distance P₁ upstream of the leading edge of the member when the member is in the fully open position, and disposed at angular distance A₁ from the TDC position. Angular distance A₁ is at least 10° measured in a direction around the main fluid passage toward the trailing edge when the member is in the fully closed position, and distance P₁ is equal to or greater than at least 60% of passage diameter D₁.

The valve assembly embodiment of the preceding paragraph can optionally include, additionally and/or alternatively, any one or more of the following features, configurations and/or additional components:

A valve assembly according to an exemplary embodiment of this disclosure, among other possible things includes at least one wall defining a main fluid passage having an upstream side and a downstream side, a top dead center (TDC) position, and a bottom dead center (BDC) position; a shaft entering the main fluid passage at the TDC position between the upstream and downstream sides of the main fluid passage; a flow control member mounted to the shaft, the member including a leading edge, a trailing edge, an upstream face and a downstream face, the member rotatable in the main fluid passage between a fully closed position defined by the leading and trailing edges abutting the one or more walls, and a fully open position defined by the member having the leading edge at the upstream side and the trailing edge at the downstream side of the main flow passage; and a servo tube including a first tube portion extending into the main fluid passage from a port disposed a distance P₁ upstream of the leading edge of the member when the member is in the fully open position, and disposed an angular distance A₁; wherein the angular distance is at least 10° measured from the TDC position in a direction around the main fluid passage toward the trailing edge of the member when the member is in the fully closed position, and the distance P₁ is equal to or greater than at least 60% of a passage diameter D₁.

A further embodiment of the foregoing assembly, wherein the first portion of the servo tube extends straight into the main fluid passage in a direction generally parallel to the shaft.

A further embodiment of any of the foregoing assemblies, wherein the first portion of the servo tube extends into the main fluid passage toward a passage inlet at an upstream angle from the bore.

A further embodiment of any of the foregoing assemblies, wherein the servo tube also includes an elbow proximate to an inlet of the main fluid passage, the elbow having a bend angle of more than 90°.

A further embodiment of any of the foregoing assemblies, wherein the servo tube includes a second portion substantially parallel to, and offset from, a valve centerline.

A further embodiment of any of the foregoing assemblies, wherein the second portion extends through a central diametrical plane of the main fluid passage.

A further embodiment of any of the foregoing assemblies, wherein the second portion has a generally downstream opening facing the flow control member.

A further embodiment of any of the foregoing assemblies, wherein the opening is disposed a distance P₂ upstream of the member when the member is in a fully closed position, the distance P₂ equal to or greater than at least 50% of the passage diameter D₂.

A further embodiment of any of the foregoing assemblies, further comprising: a linear actuator disposed in an actuator chamber, the linear actuator including at least one piston drivable along an actuator centerline, disposed perpendicular to the main fluid passage centerline, so that linear motion of the at least one piston is transverse to the valve centerline; wherein the actuator assembly and the actuator chamber have a combined center of gravity directly above the flow control element and substantially proximate to the shaft.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A bleed assembly comprising:
a bleed duct providing communication between a compressor and a manifold; and
a bleed valve (20) disposed across the bleed duct, the bleed valve comprising:
a valve housing (20) including at least one wall defining a main fluid passage having an upstream side (34A) and a downstream side (34B), a top dead center (TDC) position (76), and a bottom dead center (BDC) position (77);
an actuator assembly (24) disposed in an actuator chamber, the actuator assembly including a linear actuator disposed perpendicular to the main fluid passage centerline, so that linear motion of the actuator is transverse to a valve centerline;
a flow control member (66) separating the upstream side (34A) from the downstream side (34B) of the main fluid passage, the member (66) including a leading edge (68), a trailing edge (70), an upstream face (72) and a downstream face (74), the member (66) rotatable in the main fluid passage (28) between a fully closed position defined by the leading and trailing edges (70) abutting the one or more walls, and a fully open position defined by the member (66) having the leading edge (68) at the upstream side (34A) and the trailing edge (70) at the downstream side (34B) of the main flow passage (28);
a shaft (26) connecting the flow control member to the actuator assembly; and
a servo tube (56) including a first portion joined to a second portion (86) by an elbow (92), the first portion extending from a port (84) formed through the at least one wall (30), the port (84) disposed at a distance P₁ upstream of the member when the member (66) is in a fully closed position, and an angular distance A₁ of from the TDC position (76);
**characterized in that** the angular distance A₁ is at least 10° as measured in a direction around the main fluid passage (28) toward the trailing edge (70) of the member (66) when the member (66) is fully closed, and the distance P₁ is equal to or greater than at least 60% of a passage diameter D₁, wherein the second portion (86) of the servo tube extends substantially parallel to, and radially offset from a valve centerline, through a central diametrical plane of the main fluid passage (28), the second portion (86) having a generally downstream opening (96) facing the flow control member (66), and wherein the opening (96) is disposed a distance P₂ upstream of the member (66) when the member (66) is in a fully closed position, the distance P₂ equal to or greater than at least 50% of the passage diameter D₁.

2. The bleed assembly of claim 1, wherein the actuator assembly (24) includes a filter chamber configured to receive working fluid entering the actuator assembly from the servo tube (56), and optionally wherein the actuator assembly (24) also includes a torque motor (46) in communication with the linear actuator.

3. The bleed assembly of any preceding claim, wherein the first portion (82) of the servo tube (56) extends straight into the main fluid passage (28) in a direction generally parallel to the shaft, or wherein the first portion (82) of the servo tube (56) extends from the port (84) at an upstream angle toward an inlet to the main fluid passage (28).

4. The bleed assembly of any preceding claim, wherein the elbow (92) is proximate to an inlet (90) to the main fluid passage (28), the elbow having a bend angle of more than 90°.

5. The bleed assembly of any preceding claim, wherein the actuator assembly (24) and the actuator chamber have a combined center of gravity directly above the flow control element (66) and substantially proximate to the shaft.

6. The bleed assembly of claim 1, wherein
the shaft (26) enters the main fluid passage (28) at the TDC position (76) between the upstream (34A) and downstream sides (34B) of the main fluid passage (28).

7. The bleed assembly of claim 6, wherein the first portion of the servo tube (56) extends into the main fluid passage (28) toward a passage inlet at an upstream angle from the bore.

8. The bleed assembly of any of claims 6 or 7, further comprising:
a linear actuator (38) disposed in an actuator chamber, the linear actuator (38) including at least one piston (42A, 42B) drivable along an actuator centerline, disposed perpendicular to the main fluid passage centerline, so that linear motion of the at least one piston (42A, 42B) is transverse to the valve centerline.

## Patentansprüche

1. Ablassanordnung, die Folgendes umfasst:
einen Ablasskanal, der Kommunikation zwischen einem Verdichter und einem Verteiler bereitstellt; und
ein Ablassventil (20), das über den Ablasskanal angeordnet ist, wobei das Ablassventil Folgendes umfasst:
ein Ventilgehäuse (20), das mindestens eine Wand beinhaltet, die einen Hauptfluiddurchlass definiert, der eine stromaufwärtige Seite (34A) und eine stromabwärtige Seite (34B), eine Position (76) eines oberen Totpunkts (OT) und eine Position (77) eines unteren Totpunkts (UT) definiert;
eine Aktuatoranordnung (24), die in einer Aktuatorkammer angeordnet ist, wobei die Aktuatoranordnung einen linearen Aktuator beinhaltet, der senkrecht zu der Hauptfluiddurchlassmittellinie angeordnet ist, sodass eine lineare Bewegung des Aktuators quer zu einer Ventilmittellinie ist;
ein Strömungssteuerelement (66), das die stromaufwärtige Seite (34A) von der stromabwärtigen Seite (34B) des Hauptfluiddurchlasses trennt, wobei das Element (66) eine Vorderkante (68), eine Hinterkante (70), eine stromaufwärtige Fläche (72) und eine stromabwärtige Fläche (74) beinhaltet, wobei das Element (66) in dem Hauptfluiddurchlass (28) zwischen einer vollständig geschlossenen Position, die dadurch definiert ist, dass die Vorder- und Hinterkante (70) an die eine oder mehreren Wände anstoßen, und einer vollständig offenen Position drehbar ist, die dadurch definiert ist, dass das Element (66) die Vorderkante (68) an der stromaufwärtigen Seite (34A) aufweist und die Hinterkante (70) an der stromabwärtigen Seite (34B) des Hauptströmungsdurchlasses (28) aufweist;
eine Welle (26), die das Strömungssteuerelement mit der Aktuatoranordnung verbindet; und
ein Servorohr (56), das einen ersten Abschnitt beinhaltet, der über ein Winkelstück (92) mit einem zweiten Abschnitt (86) verbunden ist, wobei sich der erste Abschnitt von einer Öffnung (84), die durch die mindestens eine Wand (30) gebildet ist, erstreckt, wobei die Öffnung (84) in einer Entfernung P₁ stromaufwärts des Elements, wenn sich das Element (66) in einer vollständig geschlossenen Position befindet, und in einer Winkelentfernung A₁ von der OT-Position (76) angeordnet ist;
**dadurch gekennzeichnet, dass** die Winkelentfernung A₁ mindestens 10° gemessen in eine Richtung um den Hauptfluidkanal (28) zu der Hinterkante (70) des Elements (66) ist, wenn das Element (66) vollständig geschlossen ist, und die Entfernung P₁ gleich oder größer als mindestens 60 % eines Durchlassdurchmessers D₁ ist, wobei sich der zweite Abschnitt (86) des Servorohrs im Wesentlichen parallel zu und radial versetzt von einer Ventilmittellinie durch eine zentral diametrische Ebene des Hauptfluiddurchlasses (28) erstreckt, wobei der zweite Abschnitt (86) eine im Allgemeinen stromabwärtige Mündung (96) aufweist, die dem Strömungssteuerelement (66) zugewandt ist, und wobei die Mündung (96) in einer Entfernung P₂ stromaufwärts des Elements (66) angeordnet ist, wenn sich das Element (66) in einer vollständig geschlossenen Position befindet, wobei die Entfernung P₂ gleich oder größer ist als mindestens 50 % des Durchlassdurchmessers D₁.

2. Ablassanordnung nach Anspruch 1, wobei die Aktuatoranordnung (24) eine Filterkammer beinhaltet, die dazu konfiguriert ist, ein Arbeitsfluid aufzunehmen, das aus dem Servorohr (56) in die Aktuatoranordnung eintritt, und wahlweise, wobei die Aktuatoranordnung (24) ebenfalls einen Drehmomentmotor (46) in Kommunikation mit dem linearen Aktuator beinhaltet.

3. Ablassanordnung nach einem der vorhergehenden Ansprüche, wobei sich der erste Abschnitt (82) des Servorohrs (56) gerade in den Hauptfluiddurchlass (28) in eine Richtung im Allgemeinen parallel zu der Welle erstreckt, oder wobei sich der erste Abschnitt (82) des Servorohrs (56) von der Öffnung (84) mit einem stromaufwärtigen Winkel zu einem Einlass zu dem Hauptfluiddurchlass (28) erstreckt.

4. Ablassanordnung nach einem der vorhergehenden Ansprüche, wobei das Winkelstück (92) nahe an einem Einlass (90) zu dem Hauptfluiddurchlass (28) liegt, und wobei das Winkelstück einen Beugungswinkel von mehr als 90° aufweist.

5. Ablassanordnung nach einem der vorhergehenden Ansprüche, wobei die Aktuatoranordnung (24) und die Aktuatorkammer einen kombinierten Schwerpunkt direkt über dem Strömungssteuerelement (66) und im Wesentlichen nahe der Welle aufweisen.

6. Ablassanordnung nach Anspruch 1, wobei die Welle (26) an der OT-Position (76) zwischen der stromaufwärtigen (34A) und der stromabwärtigen Seite (34B) des Hauptfluiddurchlasses (28) in den Hauptfluiddurchlass (28) eintritt.

7. Ablassanordnung nach Anspruch 6, wobei sich der erste Abschnitt des Servorohrs (56) in den Hauptfluiddurchlass (28) zu einem Durchlasseinlass mit einem stromaufwärtigen Winkel von der Bohrung erstreckt.

8. Ablassanordnung nach einem der Ansprüche 6 oder 7, die ferner Folgendes umfasst:
einen linearen Aktuator (38), der in einer Aktuatorkammer angeordnet ist, wobei der lineare Aktuator (38) mindestens einen Kolben (42A, 42B) beinhaltet, der senkrecht zu der Hauptfluiddurchlassmittellinie angeordnet ist, sodass lineare Bewegung des mindestens einen Kolbens (42A, 42B) quer zu der Ventilmittellinie ist.

## Revendications

1. Ensemble purge comprenant :
une conduite de purge assurant la communication entre un compresseur et un collecteur ; et
une soupape de purge (20) disposée sur la conduite de purge, la soupape de purge comprenant :
un logement de soupape (20) incluant au moins une paroi définissant un passage de fluide principal ayant un côté amont (34A) et un côté aval (34B), une position de point mort haut (TDC) (76) et une position de point mort bas (BDC) (77) ;
un ensemble actionneur (24) disposé dans une chambre d'actionneur, l'ensemble actionneur incluant un actionneur linéaire disposé perpendiculairement à la ligne centrale de passage de fluide principal, de sorte que le mouvement linéaire de l'actionneur est transversal à une ligne centrale de soupape ;
un élément de régulation d'écoulement (66) séparant le côté amont (34A) du côté aval (34B) du passage de fluide principal, l'élément (66) incluant un bord d'attaque (68), un bord de fuite (70), une face amont (72) et une face aval (74), l'élément (66) pouvant tourner dans le passage de fluide principal (28) entre une position complètement fermée définie par les bords d'attaque et de fuite (70) venant en butée contre les une ou plusieurs parois, et une position complètement ouverte définie par l'élément (66) ayant le bord d'attaque (68) au niveau du côté amont (34A) et le bord de fuite (70) au niveau du côté aval (34B) du passage d'écoulement principal (28) ;
un arbre (26) reliant l'élément de régulation d'écoulement à l'ensemble actionneur ; et
un tube d'asservissement (56) incluant une première partie reliée à une seconde partie (86) par un coude (92), la première partie s'étendant à partir d'un orifice (84) formé à travers l'au moins une paroi (30), l'orifice (84) étant disposé à une distance P₁ en amont de l'élément lorsque l'élément (66) est dans une position complètement fermée et à une distance angulaire A₁ de la position TDC (76) ;
**caractérisé en ce que**
la distance angulaire A₁ est d'au moins 10°, telle que mesurée dans une directon autour du passage de fluide principal (28) vers le bord de fuite (70) de l'élément (66) lorsque l'élément (66) est complètement fermé, et la distance P₁ est égale ou supérieure à au moins 60 % d'un diamètre de passage D₁, dans lequel la seconde partie (86) du tube d'asservissement s'étend sensiblement parallèlement à la ligne centrale de soupape et décalée radialement par rapport à celle-ci, à travers un plan diamétral central du passage de fluide principal (28), la seconde partie (86) ayant une ouverture généralement en aval (96) faisant face à l'élément de régulation d'écoulement (66), et dans lequel l'ouverture (96) est disposée à une distance P₂ en amont de l'élément (66) lorsque l'élément (66) est dans une position complétement fermée, la distance P₂ étant égale ou supérieure à au moins 50 % du diamètre de passage D₁.

2. Ensemble purge selon la revendication 1, dans lequel l'ensemble actionneur (24) inclut une chambre de filtre configurée pour recevoir le fluide de travail entrant dans l'ensemble actionneur à partir du tube d'asservissement (56), et éventuellement dans lequel l'ensemble actionneur (24) inclut également un moteur de couple (46) en communication avec l'actionneur linéaire.

3. Ensemble purge selon une quelconque revendication précédente, dans lequel la première partie (82) du tube d'asservissement (56) s'étend de manière rectiligne dans le passage de fluide principal (28) dans une direction généralement parallèle à l'arbre, ou dans lequel la première partie (82) du tube d'asservissement (56) s'étend à partir de l'orifice (84) au niveau d'un angle amont vers une entrée du passage de fluide principal (28).

4. Ensemble purge selon une quelconque revendication précédente, dans lequel le coude (92) se trouve à proximité d'une entrée (90) du passage de fluide principal (28), le coude ayant un angle de pliage supérieur à 90°.

5. Ensemble purge selon une quelconque revendication précédente, dans lequel l'ensemble actionneur (24) et la chambre d'actionneur ont un centre de gravité combiné directement au-dessus de l'élément de régulation d'écoulement (66) et sensiblement à proximité de l'arbre.

6. Ensemble purge selon la revendication 1, dans lequel l'arbre (26) entre dans le passage de fluide principal (28) au niveau de la position TDC (76) entre les côtés amont (34A) et aval (34B) du passage de fluide principal (28).

7. Ensemble purge selon la revendication 6, dans laquelle la première partie du tube d'asservissement (56) s'étend dans le passage de fluide principal (28) vers une entrée de passage au niveau d'un angle amont de l'alésage.

8. Ensemble purge selon l'une quelconque des revendications 6 ou 7, comprenant en outre :
un actionneur linéaire (38) disposé dans une chambre d'actionneur, l'actionneur linéaire (38) incluant au moins un piston (42A, 42B) pouvant être entraîné le long d'une ligne centrale d'actionneur, disposé perpendiculairement à la ligne centrale de passage de fluide principal, de sorte qu'un mouvement linéaire de l'au moins un piston (42A, 42B) est transversal à la ligne centrale de soupape.
